# EUROPEAN PATENT APPLICATION

(11) **EP 1 271 380 A2**
(43) Date of publication of application: **02.01.2003**
(21) Application number: 02253327.7
(22) Date of filing: 17.05.2002
(51) Int. Cl.: G06F 17/60

(54) **A method and apparatus to enable flexible and direct navigation within a visual representation of an organisation**

(30) Priority: 19.05.2001 GB 0112277
(71) Applicant: Mood International Limited, York, YO10 5ZF (GB)
(72) Inventor: Hodgson, Simon, York, YO10 5ZF (GB); Whittington, Dick, York, YO10 5ZF (GB)
(74) Representative: Wood, Graham

(57) **Abstract**

The invention relates to the generation of a graphical or visual display to represent selected and/or all identified capabilities of a particular organisation. The method of the invention involves identifying and representing the capabilities visually, in conjunction with resources required to be provided to and provided by the capabilities. Linkages between the capabilities are also represented visually and selection of the same or capabilities allows the generation and display of relevant information. Navigation through and selection of the visual display features is rendered possible by a navigation mechanism which includes a display comprising a number of user selectable icons. The displays are typically generated via software on a display area.

## Description

This invention relates to a method and apparatus for navigating through graphical organisation representations, detailing several useful improvements in functionality, flexibility and ease of use over existing methods particularly, but not necessarily exclusively, with respect to computer and software based models. The method and apparatus of this invention give a simple, direct and powerful mechanism for designing and communicating the structure and collaboration of capabilities within an organisation.

Over recent years organisations in many industries have recognised and registered benefits from the construction and communication of graphical visualisations of their structures and operations such as is described, for example, in Wolstencroft D, Whittington R P, Business Systems, Technology and Change Management, TickIT International - The quarterly journal of the TickIT software quality certification scheme ISSN 1354-5884, 3Q99.

Such benefits include improvements in the areas of change and performance management, and quality implementation.

The aim of the present invention is to provide a method and apparatus to deploy and utilise a graphical representation of an organisation which is expressed in terms of capabilities and their interactions, to support analysis, design, implementation and management. It has been developed in response to the following needs that are not addressed by current methods, such needs including a need to be able to understand the location of a capability within the broader organisation, in terms of its superior and subordinate components. Furthermore, there is a need to be able to identify those other capabilities with which there are defined inter-connections, either originating or terminating at a specified capability. There is also an unmet need to be able to see and identify the input and output resources of a capability and identify which other capabilities could potentially collaborate with that specified capability, on the basis of common inputs or outputs. The representation of these needs in a graphical environment against visual representations of capabilities, at any level within an organisation, in a direct manner cannot currently be achieved in that that the user can not immediately access any of the above needs with a single, simple, intuitive action.

Recent advances in the fields of document and knowledge management have resulted in various notations and mechanisms for improving organisational effectiveness. Patents or patent applications arising from such advances have focused on operational data and linkages (see for example patents DE19729911 "Documentation data organisation system" and EP1065615 "Integrated management application") by which actual documents, schedules and so on can be grouped and connected.

The present invention improves on this by enabling the exploration and design of an organisation prior to the delivery of operational document systems.

Visual organisational modelling is known in computer system design, in relation to which patents exist for software generation via such models such as US6011987 "Method and computer system for generating process management computer programs from process models". However the visual models created by such approaches are not able to satisfy the business needs listed above. In particular, the models exist purely to define logical structures of process, without any notion of broader organisational context or potential linkages.

A component approach to software construction is known to have provided improvements in development and management of systems. Innovations originating from that work are various; but include, for example, EP0883057 "Method and apparatus for software component analysis" and WO0122331 "Method for defining an executable business model". Related to this approach is the notion of autonomous intelligent software agents, which has been reported in recent years. A number of patents in this field are known such as WO0102952 Improved Software Interface Agent. Such inventions assert a component approach to software construction whereby components are able to perform "intelligently" through deployment of sophisticated analysis techniques including "learning".

The current invention differs in several respects in that firstly, the current invention components represent general business and not necessarily software capabilities. Secondly, the capabilities of the current invention are not intended for execution as occurrences within a software system, but are intended primarily for analysis and communication purposes by organisation designers and quality managers, however this does not preclude the use of one or a number of the invention capabilities as a design for a software component. Thirdly, the structuring and navigation mechanisms offer analytical functions which are not disclosed in the known prior art; e.g. look inside, look outside.

The present invention provides a graphical organisational model together with a flexible navigation mechanism which addresses a host of business needs relating to organisation architecture and design. Through the method of the invention, a graphical organisational model is created, using capabilities that are structured so as to describe the construction of the organisation in terms of its component parts. Interactions between these components are created in terms of origin and target of interactions, and associated information flows. Each component offers the ability directly to navigate to its superior or subordinate components, or to any other capability that is linked or which may potentially be linked. The invention provides a method and apparatus for organisation design.

In a first aspect of the invention there is provided a modelling method for generating a structural, hierarchic visual representation of an organisation, said organisation represented by a series of organisation capabilities, said capabilities defined in terms of input and output resource definitions, said method including the steps of;
generating a visual representation of the organisation in terms of a collection of graphical representations representing the capabilities within the organisation and interactions between the same required to achieve their purpose,
representing the interactions using directed linkages and resource flows; and
characterised in that said representation for a selected displayed capability is determined and generated in response to a user selection of one of a range of visual icons provided as part of a navigation display.

Typically the method allows, in response to the user selection, the ability for a selected capability, for any, or any combination of;
to identify any superior and subordinate capabilities;
to identify any linkages originated or received by that capability;
to follow any linkage so as to identify the related capability;
to identify all resources received or produced by that capability;
to identify any other capability that can collaborate in terms of complementary resource usage or production.

Typically the representation of a capability allows the identification of any superior and/or subordinate capabilities directly. These are referred to as, respectively, looking outside and looking inside.

In one embodiment the capability can directly and immediately identify all linkages originated or received by the capability within any model.

Preferably the capability can directly and immediately identify any linkage whether originated or received so as to identify the related capability.

In a further aspect of the invention there is provided a method of visually representing an organisation using the following steps;
a) construct a hierarchy of capabilities to represent the component structure of the organisation;
b) construct a collection of graphical representations, or models, of the organisation
c) create a model describing an aspect of organisational behaviour by combining required capabilities.
d) Establish and direct linkages between identified capabilities to visually indicate required interactions between the identified capabilities.

Typically the construction of the hierarchy structure includes setting each capability in context with respect to any identified superior and subordinate capabilities and specifying the organisational resources required to be used and/or which may be produced, as required, by each capability in the structure.

Preferably the capabilities included within the visual model remain consistent with the defined capability hierarchy as all subordinate capabilities are included within the model for the superior capability.

In a preferred embodiment the method further includes the steps of deploying the visual representation as an organisation design and communication vehicle by utilising a navigation mechanism that enables exploration and communication of options, and the implication of their selection.

Typically, the implications can be analysed and the capability structures, interfaces, model compositions and linkages reviewed.

In accordance with the method of the invention, a visual organisational model can be created with the defined capabilities provided and structured so as to describe the composition of the organisation in terms of its component parts.

Preferably each capability is associated with a collection of resources that it needs, and another collection of resources that it produces. Interactions between capabilities are specified in terms of direction and meaning of interactions, and associated information flows.

In a further aspect of the invention there is provided apparatus for the generation of a visual representation of an organisation in terms of capabilities within the organisation and linkages between the same and resources required by and provided by said capabilities, said apparatus including a graphical user interface to allow the visual representation of the organisation to be displayed to the user, input means to allow the user to select and view details for a particular capability and to define and manipulate the visual representation and characterised in that the apparatus further includes a navigation mechanism that supports controlled navigation by the user via the visual representation from a selected capability to its superior or subordinate capabilities, incoming and/or outgoing linkages to other capabilities, resources used or produced, and potential collaborations with other capabilities.

The functionality of the navigation mechanism provides the user with the ability to explore the organisation visual representation at several levels of detail. Typically the navigation mechanism together with the rest of the apparatus and the method for its usage give a simpler and more powerful approach to the design and communication of organisations than was previously possible.

The apparatus preferably includes a means of recording organisational capabilities and their construction, together with a mechanism whereby any capability offers the ability to navigate directly to any or any combination of; its superior components, if any;
its subordinate components, if any;
any other capability that is linked ,
any other capability that may potentially be linked on the basis of compatible inputs or outputs.

In a yet further aspect of the invention there is provided a modelling method for generating a structural hierarchic representation of an organisation in terms of capabilities with input/output resource definitions, comprising the steps of generating a visual representation of the organisation in terms of a collection of graphical representations, or models, showing how capabilities interact in order to achieve the required purposes, using directed linkages and resource flows and said structure includes any or any combination of the ability for at least one capability, to identify any superior and subordinate capabilities; the ability, for at least one capability, to identify any linkages originated or received by the capabilities; the ability for at least one capability, to follow any linkage so as to identify the related capability; the ability, for at least one capability to identify all resources received or produced by the capability; the ability, for at least one capability, to identify any other capabilities that might collaborate in terms of complimentary resource usage or production.

In a further aspect there is provided a method for graphically representing and linking a series of capabilities, said method comprising the steps of constructing a hierarchy of capabilities to describe the component structure of an organisation, constructing a collection of graphical representations, or models, of the organisation using capability components creating a model describing an aspect of organisational behaviour by combining required capabilities and establishing directed linkages between capabilities to indicate required interactions.

A preferred embodiment of the invention is now described with reference to the accompanying diagrams; wherein
Figure 1 illustrates in schematic fashion an embodiment of the method in accordance with the invention;
Figure 2 illustrates the construction of a hierarchy of capabilities in accordance with the invention;
Figure 3 illustrates a number of visual representations of an organisation using capability components in accordance with an embodiment of the invention;
Figure 4 illustrates the use of a navigation mechanism in accordance with an embodiment of the invention;
Figure 5 illustrates the use of the navigation mechanism to allow for linked capabilities to be automatically inserted into the model.
Figure 6 illustrates the ability to allow potentially collaborating capabilities to be automatically inserted into the model.

With reference to the Figures the invention is illustrated implemented as a collection of visual structuring and diagramming facilities, together with a navigation mechanism, which can be provided as part of a business development and transformation system using a visual user-interface, typically in the form of a display screen connected with input means in the form of a keyboard and/or computer mouse to allow selection by the user of available features and functions as will now be described.

The visual representation can be used to define and communicate best practice within an organisation, with the potential benefit of enhanced business performance and the reduction in the risk of failure to adhere to best practise, whether that best practise is defined within the organisation or by a regulatory body.

Within the visual model there is provided representation of best practice and the resources that these practices require in order to be delivered by a range of capabilities along with an evolving collection of resources, and agreements as to which capabilities use and produce them. Identification of potential collaborations between capabilities and processes so as to create optimal value chains also becomes a key motivation for organisation developers. Furthermore, in the relatively complex modern organisations, identification and selection from alternative sources contributes to an organisation's intelligence and adaptability.

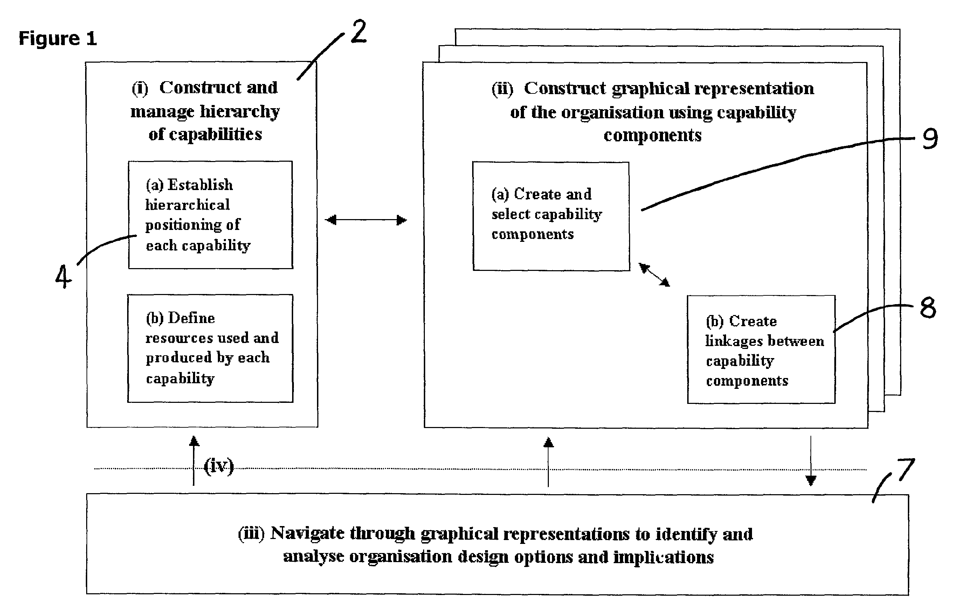

Referring now to Figure 1 there is illustrated a method in accordance with an embodiment of the invention as described herein. The method and accompanying apparatus allow the creation and deployment of the visual representation, as well as user navigation through the visual representation is shown.

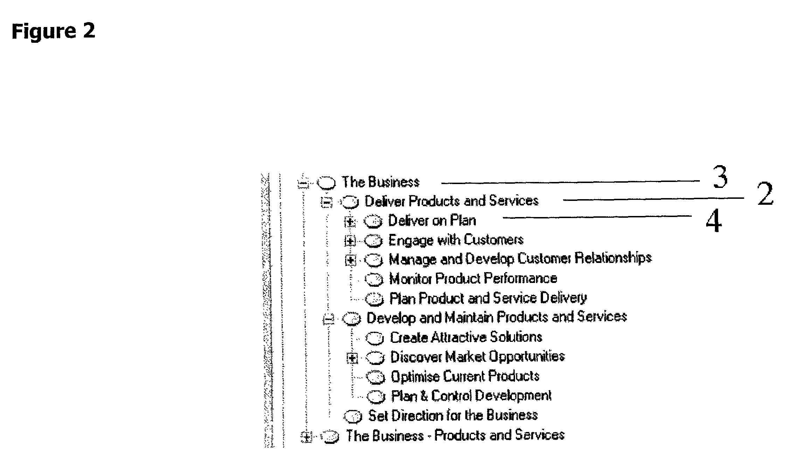

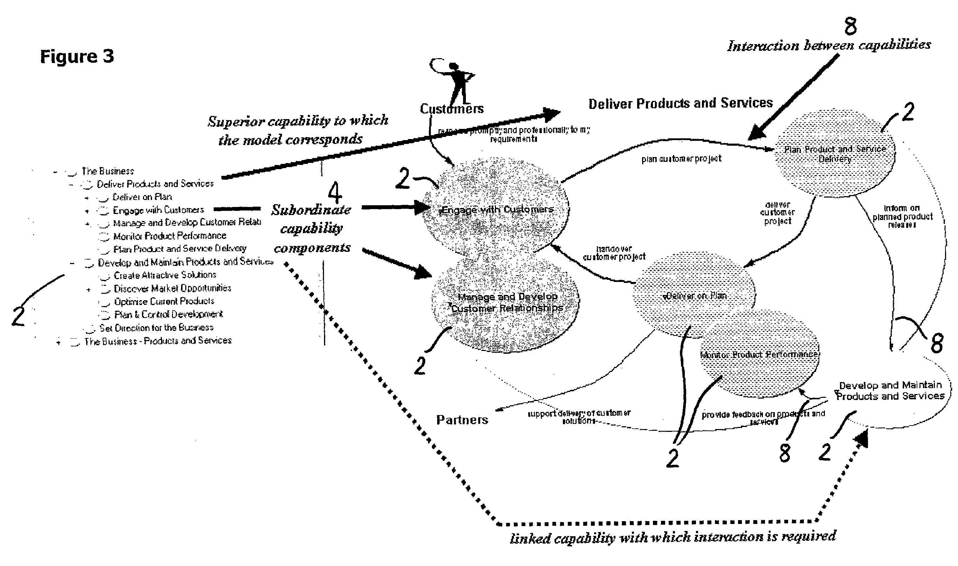

The method for representing the organisation in the visual model involves the steps of firstly identifying the capabilities 2 which are available to be performed by the organisation in question. Each capability is then provided within a hierarchy of capabilities 4 as appropriate from analysis of the organisation and so a visual representation of the structure of the organisation, as shown in Figure 2 is created. Each capability 2 is set in the context of its superiors 3 and subordinates 4. In addition interaction between the capabilities is generated and indicated via linkages 8 which will be described in greater detail hereonin and as illustrated with respect to Figure 3.

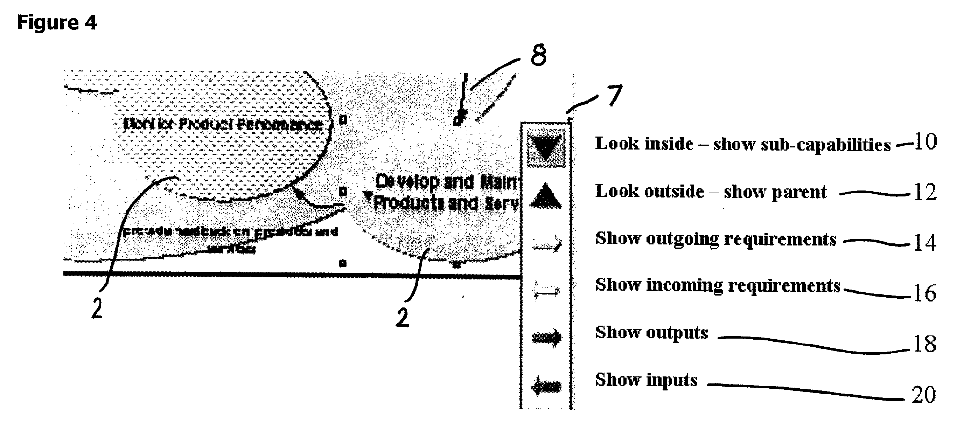

The resources used and produced 9 by the capabilities are then specified, as required, for capabilities at any level of the structure and the construction of a navigation system 7 represented by a collection of graphical icons 10-20 as shown in Figure 4 the visual representation of the navigation mechanism allows the user to select to view specific features of a selected organisation capability visually as shown in Figure 4 which shows a section indicated by broken lines of the visual display of Figure 3.

Models can then be created for describing user selectable aspects of organisational behaviour by combining required capabilities so as to establish directed linkages between capabilities to indicate required interactions. Thus, the capabilities included within any model remain consistent with the hierarchy in that all defined subordinate capabilities are included within the model for the superior capability.

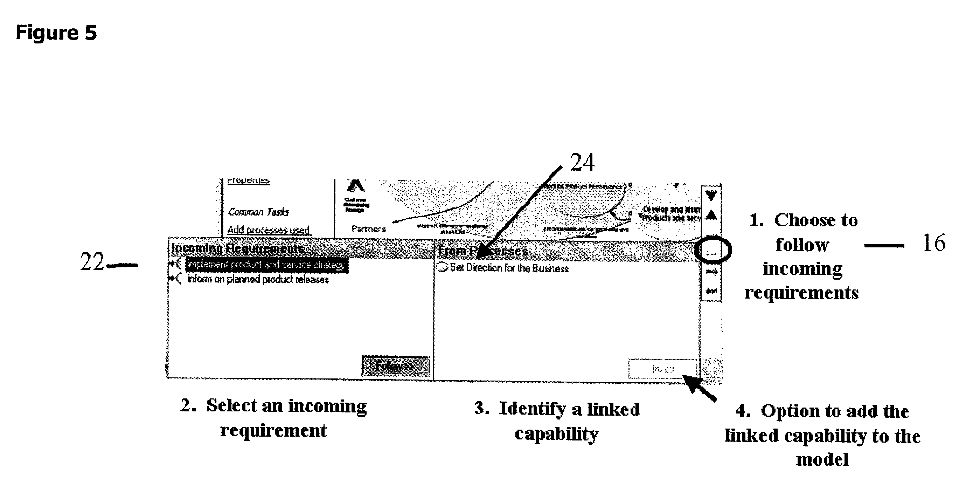

In practice therefore, and as illustrated with respect to Figure 5 if the user selects via the icon 16 to view incoming requirements for the capability "Develop and Maintain Products and Services" then the incoming requirements 22 are illustrated and also any linked capability, in this case "Set Direction for The Business", 24, is illustrated. If required the linked capability displayed can be added to the visual model.

The visual representation is then deployed as an organisation design and communication means, with the navigation mechanism 7 as described, incorporating the icons 10-20 allowing the user, once they have selected a particular visually displayed capability, to then view selected details relating to the same. This enables the exploration and communication of design options, and implications as shown in Figure 5. With an analysis of the implications, the capability structures, interfaces, compositions and linkages can be reviewed.

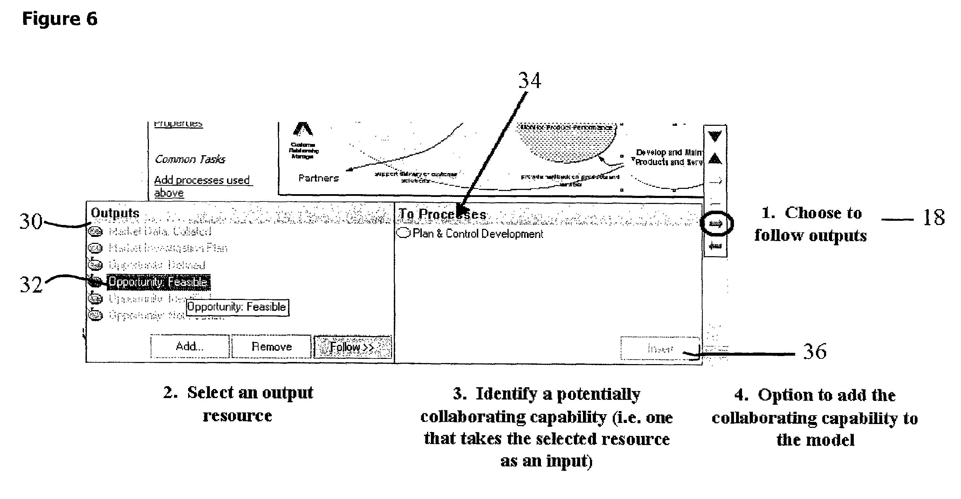

As described, navigation is achieved by means of the integrated mechanism represented by the navigation bar icons 10-20 that enables all exploration, options and implications to be performed directly by the user. This mechanism also allows for linked capabilities to be automatically inserted into a graphical model, as illustrated in Figure 6. In this Figure, the user, having selected the capability "Develop and Maintain Products and Services" has this time selected the icon 18 to choose to view the outputs from that capability. These outputs 30 are displayed and the user has selected the output resource "Opportunity: Feasible" 32. This results in the user being informed that the capability "Plan and Control Development" 34 also has the selected resource 32 and therefore is classed as a potentially collaborating capability which can be added and linked in the visual model by the user via the selection of the Insert icon 36.

Thus the invention described in this application can be used as a central resource within an organisational development and change management methodology and toolset.

## Claims

1. A modelling method for generating a structural, hierarchic visual representation of an organisation, said organisation represented by a series of organisation capabilities, said capabilities defined in terms of input and output resource definitions, said method including the steps of;
generating a visual representation of the organisation in terms of a collection of graphical representations representing the capabilities within the organisation and interactions between the same required to achieve their purpose,
representing the interactions using directed linkages and resource flows; and
**characterised in that** said representation for a selected displayed capability is determined and generated in response to a user selection of one of a range of visual icons provided as part of a navigation display.

2. A method according to claim 1 **characterised in that** the method allows, in response to the user selection, the ability for a selected capability, for any, or any combination of;
to identify any superior and subordinate capabilities;
to identify any linkages originated or received by that capability;
to follow any linkage so as to identify the related capability;
to identify all resources received or produced by that capability;
to identify any other capability that can collaborate in terms of complementary resource usage or production.

3. A method according to claim 1 **characterised in that** the representation of a capability allows the identification of any superior and/or subordinate capabilities directly.

4. A method according to claim 1 **characterised in that** the capability in the visual representation directly identifies all linkages originated or received by the capability within any model.

5. A method according to claim 1 **characterised in that** the capability directly identifies any linkage whether originated or received so as to identify the related capability.

6. A method of visually representing an organisation using the following steps;
constructing a hierarchy of organisation capabilities to represent the component structure of the organisation;
constructing a collection of visual representations, or models, of the organisation;
creating a model describing an aspect of organisational behaviour by combining required capabilities
establishing and directing linkages between identified capabilities to visually indicate required interactions between the identified capabilities.

7. A method according to claim 6 **characterised in that** the construction of the hierarchy structure includes setting each capability in context with respect to any identified superior and subordinate capabilities and specifying the organisational resources required to be used and/or which may be produced, as required, by each capability in the structure.

8. A method according to claim 7 **characterised in that** the capabilities included within the visual model remain consistent with the defined capability hierarchy as all subordinate capabilities are included within the model for the superior capability.

9. A method according to claim 6 **characterised in that** the method includes the further step of deploying a navigation mechanism, said mechanism incorporating a display of a number of user selectable icons, each icon linked to generate the display of a particular feature of a user selected capability.

10. A method according to claim 6 **characterised in that** each capability is associated with a collection of resources that it needs, and another collection of resources that it produces.

11. A method according to claim 6 **characterised in that** interactions between capabilities are specified in terms of direction and meaning of interactions, and associated information flows.

12. Apparatus for the generation of a visual representation of an organisation in terms of capabilities within the organisation and linkages between the same and resources required by and provided by said capabilities, said apparatus including a graphical user interface to allow the visual representation of the organisation to be displayed to the user, input means to allow the user to select and view details for a particular capability and to define and manipulate the visual representation and **characterised in that** the apparatus further includes a navigation mechanism that supports controlled navigation by the user via the visual representation from a selected capability to its superior or subordinate capabilities, incoming and/or outgoing linkages to other capabilities, resources used or produced, and potential collaborations with other capabilities.

13. Apparatus according to claim 12 **characterised in that** the functionality of the navigation mechanism provides the user with the ability to explore the organisation visual representation at several levels of detail.

14. A modelling method for generating a structural hierarchic representation of an organisation in terms of capabilities with input/output resource definitions, comprising the steps of generating a visual representation of the organisation in terms of a collection of graphical representations, or models, showing how capabilities interact in order to achieve the required purposes, using directed linkages and resource flows and said structure includes any or any combination of the ability for at least one capability, to identify any superior and subordinate capabilities; the ability, for at least one capability, to identify any linkages originated or received by the capabilities; the ability for at least one capability, to follow any linkage so as to identify the related capability; the ability, for at least one capability to identify all resources received or produced by the capability; the ability, for at least one capability, to identify any other capabilities that might collaborate in terms of complimentary resource usage or production.

15. A method for graphically representing and linking a series of capabilities, said method comprising the steps of constructing a hierarchy of capabilities to describe the component structure of an organisation, constructing a collection of graphical representations, or models, of the organisation using capability components creating a model describing an aspect of organisational behaviour by combining required capabilities and establishing directed linkages between capabilities to indicate required interactions.
